Europäisches Patentamt

European Patent Office

Office européen des brevets

(19)

(11) Veröffentlichungsnummer: **0 125 680**
**B1**

(12) **EUROPÄISCHE PATENTSCHRIFT**

(45) Veröffentlichungstag der Patentschrift:
15.10.86

(21) Anmeldenummer: **84105442.2**

(22) Anmeldetag: **14.05.84**

(51) Int. Cl.⁴: **C 09 K 17/00, E 21 B 33/138**

(54) **Verfahren zum Abdichten einer unter der Bodenoberfläche liegenden Bodenschicht aus Sand oder Kiessand mit Klärschlamm.**

(30) Priorität: **14.05.83 DE 3317664**

(43) Veröffentlichungstag der Anmeldung:
**21.11.84 Patentblatt 84/47**

(45) Bekanntmachung des Hinweises auf die Patenterteilung:
**15.10.86 Patentblatt 86/42**

(84) Benannte Vertragsstaaten:
**AT BE CH DE FR GB IT LI NL SE**

(56) Entgegenhaltungen:
**DE-A-2 702 787**
**US-A-2 227 653**

**PATENTS ABSTRACTS OF JAPAN, Band 4, Nr. 89 (C-16) 571 , 25. Juni 1980, Seite 72 C-16;**

**Die Akte enthält technische Angaben, die nach dem Eingang der Anmeldung eingereicht wurden und die nicht in dieser Patentschrift enthalten sind.**

(73) Patentinhaber: **Kügler, Jost- Ulrich, An der Altenburg 15, D-4300 Essen- Werden (DE)**

(72) Erfinder: **Kügler, Jost- Ulrich, An der Altenburg 15, D-4300 Essen- Werden (DE)**

(74) Vertreter: **Dost, Wolfgang, Dr.rer.nat., Dipl.-Chem., Patent- und Rechtsanwälte Bardehle-Pagenberg- Dost- Altenburg & Partner Postfach 86 06 20, D-8000 München 86 (DE)**

EP 0 125 680 B1

LIBER, STOCKHOLM 1986

### Beschreibung

Die Erfindung bezieht sich auf ein Verfahren zum Abdichten einer unter der Bodenoberfläche liegenden Bodenschicht aus Sand oder Kiessand gegen Wasser.

Bei Vorliegen einer derartigen Bodenbeschaffenheit hat man bisher wegen der großen Porösität von Sand oder Kiessand entweder eine Folienabdeckung vorgenommen, die relativ teuer ist. Bei diesem Verfahren muß man außerdem in Kauf nehmen, daß durch spätere Verletzung bzw. Alterung der Folie diese weitgehend unwirksam wird. Eine andere bekannte Möglichkeit der Abdichtung von Sand oder Kiessand besteht darin, durch Beimischung von Bitumen wasserdichte Asphaltschichten zu erzeugen. Auch dieses Verfahren ist wegen der Aufbereitung sehr aufwendig und teuer.

Es ist an sich aus der DE-OS 30 41 706 bekannt, für die Abdichtung von Abfalldeponien ein Abfallprodukt zu verwenden, und zwar das bei Kohlekraftwerken anfallende Abfallkarbonat. Hierbei handelt es sich der Korngrößenverteilung nach um einen sandigen Lehm. Das Abfallprodukt wird über einer Ausgleichsschicht als Sperrschicht aufgetragen, über der eine Deckschicht aufgetragen wird.

Insgesamt sind also bei dieser Abdichtung drei Schichten erforderlich. Das Abfallcarbonat selbst verhärtet sich im Laufe der Zeit so stark, daß es praktisch steinartige Eigenschaften annimmt und daher zum Reißen und damit Undichtwerden neigt. Die bekannte Verwendung des Abfallcarbonats ist mit dem erfindungsgemäßen, nicht vergleichbar, bei dem es entscheidend auf die Einarbeitung des Abfallprodukts, nämlich des Klärschlamms, in eine Bodenschicht aus Sand bzw. Kiessand ankommt.

Der Erfindung liegt die Aufgabe zugrunde, ein demgegenüber wirtschaftlicheres Verfahren zur Abdichtung von Sand oder Kiessand zu schaffen. Diese Aufgabe wird durch Einarbeitung von aus Abwasserkläranlagen gewonnenem Klärschlamm gelöst, der durch Wasserentzug in pastöse bzw. knetbare Form gebracht ist und der Bodenschicht in einem Gewichtsverhältnis von etwa 15 - 30 % bezogen auf das Trockengewicht der Bodenschicht beigemischt wird, und durch anschließendes mechanisches Verdichten der Mischung aus Sand bzw. Kiessand und dem Klärschlamm.

Klärschlamm bildet ein praktisch überall anfallendes Abfallprodukt, das durch das erfindungsgemäße Verfahren in vorteilhafter Weise nutzbringend verwendet werden kann. Es steht auch preisgünstig zur Verfügung, da es normalerweise unter Aufwendung von Kosten abgelagert werden muß. Der Klärschlamm stellt in der pastösen bzw. knetbaren Form ein feinstkörniges bzw. schluffiges Material dar, das infolge seiner Beimischung zu dem Sand bzw. Kiessand dessen relativ große Poren ausfüllt. Durch das anschließende mechanische Verdichten ergibt sich eine besonders dichte Bodenschicht mit verbleibender Plastizität, so daß sich bei späteren Bodenbelastungen, z. B. Überfahren durch schwere Fahrzeuge, kein Reißen und damit Undichtwerden der Bodenschicht ergibt. Das Verfahren läßt sich bodenmechanisch mit entsprechenden Erdbaugeräten ohne Schwierigkeiten durchführen und liefert somit die Möglichkeit, vor allem in Wüstengegenden eine Bodenabdichtung herbeizuführen, bei der einerseits eine in hohem Maße erwünschte Abfallbeseitigung erzielt wird, andererseits die Möglichkeit geschaffen wird, eine Kultivierung und Bewässerung des über der abgedichteten Bodenschicht liegenden Bodens zu schaffen, womit in derartigen Gegenden in wirtschaftlicher Weise überhaupt erst dauerhafte Bepflanzungen möglich werden.

Wird nun die erfindungsgemäß behandelte Bodenschicht dem Druck eines Wasseraufstaues ausgesetzt, so kann es in der Bodenschicht zu einer Ausspülung von Feinstbestandteilen kommen. Dies läßt sich vorteilhaft dadurch beseitigen, daß dem einzuarbeitenden Klärschlamm Gelbildner, wie Wasserglas, Phosphat, Aluminat, Kalk, Steinkohlenflugasche, Dämmer zugegeben werden, und zwar in einem Gewichtsverhältnis von 2 - 20 ‰ bezogen auf das Trockengewicht der gemischten Bodenschicht. Im Falle der Verwendung von Wasserglas kann es sich dabei um flüssiges oder pulverförmiges Wasserglas handeln. Das in dem pastösen bzw. knetbaren Klärschlamm verbliebene Wasser bzw. die im Klärschlamm enthaltenen Chemikalien bewirken zusammen mit den vorstehend erwähnten Zugabestoffen die Bildung von Gelen, die die Feinstbestandteile binden und damit deren Auswaschen verhindern. Die Gelbildungen durch den Einsatz von Wasserglas und Phosphat erbringen einen zusätzlichen verbleibenden Abdichtungseffekt. Darüber hinaus bewirken die Wasserglas-Gele eine chemische Bindung von gegebenenfalls im Klärschlamm vorhandenen Schwermetallen, was aus Gründen des Umweltschutzes wünschenswert ist.

Es ist an sich aus der DE-PS 27 02 787 bekannt, feinstkörnige oder schluffige, erdfeuchte Böden durch Einarbeitung von pulverförmigen Alkalisilikat (Wasserglas) und anschließendes mechanisches Verdichten abzudichten. Dieses Verfahren setzt also das Vorhandensein von Böden voraus, die von Hause aus eine besondere Feinporigkeit aufweisen. Demgegenüber handelt es sich bei der Erfindung darum, eine Abdichtung von relativ großporigen Böden zu schaffen, wie diese bei Vorhandensein von Sand bzw. Kiessand vorliegen.

Die Einarbeitung des Klärschlamms und ggfs. des Gelbildners erfolgt zweckmäßigerweise so, daß das gewonnene Bodenmaterial durch Walzen bis zu einem Verdichtungsdrad von mehr als 93 % Proctor-Dichte verdichtet wird (Proctor-Dichte siehe "Grundbau Taschenbuch, Band 1'', Verlag Wilhelm Ernst und Sohn, Berlin).

Folgender Abdichtungsversuch wurde unter Zugrundelegung von Wüstensand durchgeführt:

In einen Stahlzylinder mit einem Innendurchmesser von 15 cm wurde die aus dem Sand mit dem Klärschlamm zusammengemischte Probe untergebracht und mit Proctor-Energie eingestampft (Proctor-Energie siehe oben erwähntes Handbuch, Seite 36). Die Probenhöhe betrug 15 bis 24 cm. Der Stahlzylinder wurde mit einem Deckel wasserdicht verschlossen. In den Deckel war ein Rohr mit einem Innendurchmesser von 2 cm abgedichtet eingesetzt. Der Stahlzylinder und das Rohr wurden mit Wasser gefüllt. Die über der am Boden des Stahlzylinders zusammengedrückte Probe stehende Wassersäule hatte eine Höhe von 1 bis 1,2 Meter. Der den Stahlzylinder abschließende Deckel war dabei konisch gestaltet, so daß sich im Innenraum keine Luftblase ansammeln konnte. Aufgrund des Innendurchmessers des Rohres von 2 cm und dem Innendurchmesser des Zylinders von 15 cm (gleich Außendurchmesser der Probe) ergab sich ein Querschnittsverhältnis von 1 : 56. Hierdurch wurde eine hohe Ablesegenauigkeit erzielt.

Folgende Durchlässigkeiten wurden gemessen:

| Bodenart | Klärschlamm zugabe in % | Wasserglas zugabe in % | Phosphat- zugabe | Dämmer-[*] zugabe | Kalk- zugabe | $K_f$-Wert m/s |
|---|---|---|---|---|---|---|
| Wüstensand aus Kairo | 15 % | — | — | — | — | $8,5 \times 10^{-8}$ |
| —"— | 20 % | — | — | — | — | $1,2 \times 10^{-8}$ |
| —"— | 20 % | 5 % | 2 % | — | — | $2,06 \times 10^{-9}$/1. Tag $4,6 \times 10^{-10}$/3. Tag |
| —"— | 20 % | — | — | 2 % | 1 % | $1,45 \times 10^{-8}$ |
| Mittelbis Grobsand | 15 % | — | — | — | — | $6,5 \times 10^{-7}$ |
| —"— | 20 % | — | — | — | — | $1,39 \times 10^{-7}$ |
| —"— | 20 % | 5 % | 2 % | — | — | $1,5 \times 10^{-9}$ |
| —"— | 20 % | — | — | 2 % | 1 % | $9,5 \times 10^{-6}$ |
| Kiessand | 15 % | — | — | — | — | $2,34 \times 10^{-8}$ |
| —"— | 20 % | — | — | — | — | $5,2 \times 10^{-9}$ |
| —"— | 20 % | 5 % | 2 % | — | — | $7,3 \times 10^{-10}$ |
| —"— | 20 % | — | — | 2 % | 1 % | $1,66 \times 10^{-8}$ |

[*] Bei Dämmer handelt es sich um ein hydraulisches Bindemittel der Anneliese Zementwerke AG, 4722 Ennigerloh, folgender Zusammensetzung: 30 % Zement, 60 % Kalkmehl, 10 % Ton.

Das erfindungsgemäße Verfahren ist, wie bereits oben gesagt, besonders vorteilhaft für die Abdichtung von Wüstenboden verwendbar, der durch Bewässerung für eine Kultivierung nutzbar gemacht werden kann, wenn er eine unter der Bodenoberfläche liegende abgedichtete Bodenschicht erhält. Dabei besteht nicht nur die Möglichkeit der Wasserzufuhr durch Berieselung, sondern auch in besonders vorteilhafter Weise durch unterirdische Bewässerung nach Art von Drainagen. Diese Bewässerung hat gegenüber der Berieselung den Vorteil, daß die bei der Berieselung entstehende starke Verdunstung an der Oberfläche weitgehend vermieden wird. Bei dieser unterirdischen Bewässerung wird zweckmäßig oberhalb der abdichtenden Bodenschicht eine Filterschicht, z. B. bestehend aus Kies oder Kiessand, aufgebracht, die wegen ihrer Großporigkeit als Wasserspeicher dient, der durch Drainagen durchzogen wird. Auf dieser Filterschicht wird dann Mutterboden aufgebracht, der zu bepflanzen ist. Durch entsprechend anzuordnende Gefälle der Dränleitungen kann dem Filter Frischwasser zufließen. Das überschüssige Wasser kann durch eine Sammelleitung wieder zur Vorflut, der Gewinnungsstelle für das Frischwasser, abfließen. Die Feuchtigkeit wird durch Kapillarwirkung von der Filterschicht in den Mutterboden übertragen. Wenn nun beim Antransport des pastösen bzw. plastischen Klärschlamms in Wüstengegenden dieser zu viel Wasser verloren hat, bzw. beim Einbauen und Verdichten verliert, kann man diesen Wasserverlust durch Zugabe von Meerwasser ausgleichen. Dies ist besonders in an Meere angrenzenden Wüstengegenden von Vorteil.

Wie aus der Tabelle ersichtlich ist, handelt es sich bei der Ausführungsform unter Verwendung von Wasserglas, vorzugsweise unter Mitverwendung von Phosphat, um eine besonders bevorzugte Ausführungsform. Die Menge an Wasserglas, bezogen auf das Trockengewicht des Sandes oder der gemischten Bodenschicht, beträgt hierbei im allgemeinen 1 - 10 Gew.-% und vorzugsweise 3 - 7 Gew.-%, wobei mit einer Wasserglasmenge von etwa 5 Gew.-% in der Praxis besonders vorteilhafte Ergebnisse erhalten wurden. Die Phosphatmenge beträgt im allgemeinen 0,5 - 5 Gew.-% und vorzugsweise 1 bis 3 Gew.-%, wobei mit ein er Phosphatmenge von etwa 2 Gew.-% in der Praxis besonders vorteilhafte Ergebnisse erhalten wurden. Die Phosphatmengen sind hierbei den vorgenannten Wasserglasmengen zugeordnet.

Die vorgenannten besonders bevorzugten Mengen an Wasserglas (etwa 5 Gew.-%) und Phosphat (etwa 2 Gew.-%) wurden mit Klärschlammzusätzen von 20 % ermittelt. Bei geringeren Klärschlammkonzentrationen als 20 % kann eine höhere Dosierung an Wasserglas und Phosphat erforderlich sein. Umgekehrt kann bei höheren Klärschlammkonzentrationen eine Erniedrigung der Mengen an Wasserglas und Phosphat möglich sein.

Darüber hinaus steht bisweilen Klärschlamm zur Verfügung, der aus bestimmten Gründen mit Kalk durchsetzt ist. In diesem Fall können die Phosphatmengen reduziert oder sogar gänzlich weggelassen werden. Ähnliches gilt für Klärschlamm, der durch die Art seiner Gewinnung andere kationische oder anionische Bestandteile enthält, die mit Wasserglas ein bindiges Reaktionsprodukt ergeben.

Weiterhin hat sich als besonders vorteilhaft erwiesen, daß durch die aus dem Wasserglas gebildete Kieselsäure im Boden unerwünschte Schwermetallkationen sorbiert und damit weitgehend unschädlich gemacht werden.

## Patentansprüche

1. Verfahren zum Abdichten einer unter der Bodenoberfläche liegenden Bodenschicht aus Sand oder Kiessand gegen Wasser, gekennzeichnet durch Einarbeitung von aus Abwasserkläranlagen gewonnenem Klärschlamm, der durch Wasserentzug in pastöse bzw. knetbare Form gebracht ist und der Bodenschicht in einem Gewichtsverhältnis von etwa 10 - 30 % bezogen auf das Trockengewicht der Bodenschicht beigemischt wird,und anschließendes mechanisches Verdichten.

2. Verfahren nach Anspruch 1, gekennzeichnet durch Zugabe von Gelbildnern, wie Wasserglas, Phosphat, Aluminat, Kalk, Hydrokreide, Zement in einem Gewichtsverhältnis von 5 - 20 ‰ bezogen auf das Trockengewicht der gemischten Bodenschicht.

3. Verfahren nach Anspruch 1 oder 2, dadurch gekennzeichnet, daß das durch Einarbeitung des Klärschlamms und gegebenenfalls des Gelbildners gewonnene Bodenmaterial durch Walzen bis zu einem Verdichtungsgrad von mehr als 92 % Proctor-Dichte verdichtet wird.

## Revendications

1. Procédé d'étanchéification d'une couche souterraine de sol sablonneux ou graveleux, caractérisé par l'incorporation de boues de décantation provenant de stations d'épuration des eaux usées, amenées sous la forme pâteuse ou plastique par déshydratation et mélangées à la couche de sol à raison de 10 à 30% du poids sec de la couche de sol, suivie d'un compactage mécanique.

2. Procédé selon la revendication 1, caractérisé par addition de gélifiants, tels que verre soluble, phosphate, aluminate, chaux, craie hydraulique, ciment, à raison de 5 à 20% du poids sec de la couche de sol mélangée.

3. Procédé selon la revendication 1 ou 2, caractérisé en ce que le matériau de sol obtenu par incorporation des boues de décantation et le cas échéant de gélifiants, est compacté par cylindrage, jusqu'à un degré de compactage supérieur à 92% de densité Proctor.

**Claims**

1. Process for making a ground layer of sand or gravel sand beneath the ground surface watertight, characterised by working in sewage sludge obtained from sewage treatment plants which has been brought into pasty or plastic form by the removal of water and is mixed into the ground layer in a weight proportion of about 10-30% with respect to the dry weight of the ground layer, and subsequent mechanical compaction.

2. Process as claimed in claim 1, characterised by the addition of gelling agents, such as water glass, phosphate, aluminate, lime, hydrochalk, cement in a weight proportion of 5-20% with respect to the dry weight of the mixed ground layer.

3. Process as claimed in claim 1 or 2, characterised in that the ground material obtained by working in the sewage sludge and optionally the gelling agent is compacted by rollers to a degree of compaction of more than 92% Proctor density.